# EUROPÄISCHE PATENTSCHRIFT

(11) **EP 3 836 361 B1**
(45) Veröffentlichungstag und Bekanntmachung des Hinweises auf die Patenterteilung: **09.12.2026**
(21) Anmeldenummer: 19214432.7
(22) Anmeldetag: 09.12.2019
(51) Int. Cl.: H02K 3/28, H02K 3/52

(54) **MOTOREINHEIT FÜR EINEN TÜRANTRIEB ZUR ANORDNUNG AN ODER IN VERBINDUNG MIT EINER GEBÄUDETÜR**
MOTOR UNIT FOR A DOOR DRIVE FOR ARRANGEMENT ON OR IN CONNECTION WITH A BUILDING DOOR
UNITÉ MOTEUR POUR UN ENTRAÎNEMENT DE PORTE DESTINÉE À L'AGENCEMENT SUR OU EN COMBINAISON AVEC UNE PORTE DE BÂTIMENT

(43) Veröffentlichungstag der Anmeldung: 16.06.2021
(73) Patentinhaber: dormakaba Deutschland GmbH, 58256 Ennepetal (DE)
(72) Erfinder: Wagner, Martin, 58256 Ennepetal (DE)
(74) Vertreter: Balder IP Law, S.L.

(56) Entgegenhaltungen:
- EP-B1- 3 016 247
- CN-U- 201 549 943
- DE-A1- 102009 022 899
- JP-B2- 3 044 554
- US-A1- 2013 043 749
- US-A1- 2014 145 547

## Beschreibung

Die Erfindung betrifft eine Motoreinheit für einen Türantrieb zur Anordnung an oder in Verbindung mit einer Türanlage, mit der zumindest ein Flügelelement der Türanlage bewegbar ist, aufweisend ein Gehäuse, in dem der Stator ruhend aufgenommen ist und wobei ein Rotor drehbeweglich im Gehäuse angeordnet ist, der eine Abtriebswelle aufweist, wobei die Abtriebswelle mit dem Flügelelement antreibend in Wirkverbindung bringbar ist. Der Stator weist ein Wicklungssystem mit einer ersten Wicklungseinheit auf, umfassend drei Stränge, und mit einer zweiten Wicklungseinheit, umfassend weitere drei Stränge, wobei die Wicklungseinheiten elektrisch voneinander getrennt sind, und wobei der Stator eine Anzahl von zueinander benachbarten Zähnen aufweist, auf denen die Stränge zu Spulen aufgewickelt sind, die jeweils auf einem zugeordneten Zahn des Stators sitzen, und wobei die Wickelrichtung der zueinander benachbarten Spulen wenigstens einer der Wicklungseinheiten von Spule zu Spule abwechselnd ausgebildet ist und dass jeweils zwei benachbarte Spulen ein Spulenpaar bilden, die einen gemeinsamen Strang aufweisen.

Die EP 3 016 247 B1 beschreibt eine Motoreinheit für einen Türantrieb, und der Stator der Motoreinheit weist ein Wicklungssystem mit einer ersten Wicklungseinheit, aufweisend drei Stränge, und mit einer zweiten Wicklungseinheit, ebenfalls aufweisend drei Stränge, auf. Die Wicklungseinheiten sind elektrisch voneinander getrennt, wobei der Stator eine Anzahl von zueinander benachbarten Zähnen umfasst, auf denen die Stränge zu Spulen aufgewickelt sind.

Aus der US 2014/0145547 A1 ist ein Permanentmagnetmotor bekannt geworden, aufweisend: einen Rotor mit einem Rotoreisenkern und einer Vielzahl von Seltenerdpermanentmagneten, die an dem Rotoreisenkern vorgesehen sind; und einen Stator aufweisend: einen Statoreisenkern mit einer Vielzahl von Zähnen, und zwei Sätze von dreiphasigen Ankerwicklungen, die in einer Vielzahl von in dem Statoreisenkern ausgebildeten Schlitzen vorgesehen sind, wobei einer ersten Ankerwicklung Strom von einem ersten Wechselrichter und einer zweiten Ankerwicklung Strom von einem zweiten Wechselrichter zugeführt wird, wobei die zwei Sätze von dreiphasigen Ankerwicklungen so definiert sind, dass die erste Ankerwicklung der U1-Phase, V1-Phase und W1-Phase entspricht und die zweite Ankerwicklung der U2-Phase, V2-Phase und W2-Phase entspricht, wobei die U1-Phase, die V1-Phase, und die W1-Phase der ersten Ankerwicklung beim Fahren um einen elektrischen Winkel von 20° bis 40° von der U2-Phase, der V2-Phase, und der W2-Phase der zweiten Ankerwicklung verschoben sind, und wobei die U1-Phase der ersten Ankerwicklung in beiden Schlitzen von einem beliebigen Paar von benachbarten Schlitzen der Vielzahl von Schlitzen vorgesehen ist, oder zumindest eine aus der U1-Phase der ersten Ankerwicklung und der U2-Phase der zweiten Ankerwicklung in einem Schlitz von einem beliebigen Paar von benachbarten Schlitzen der Vielzahl von Schlitzen vorgesehen ist. Eine vorteilhafte Zu- und Abführung der Kontaktierungen der Spulen mit nur einem Leiter zwischen zueinander benachbarten Spulen ist dabei nicht erreichbar.

Bei der automatischen Bewicklung von Statoren mit einem Wickelautomaten ist es von Vorteil, bestimmte Wicklungsrichtungen einzuhalten, sodass die Spulen der Statoren nicht ein zu komplexes Wickelschema erfordern. Die Wickelrichtung für allel Spulen, beispielsweise zwölf Spulen auf einem etwa ringförmigen Stator, muss genau eingehalten werden, sonst kann es zur Fehlfunktion der Motoreinheit kommen.

Sind die Spulen so gewickelt, dass die Wicklungsdrähte aus den selben Zwischenräumen zwischen den Zähnen herausgeführt werden, so kann bauraumbedingt das Problem der Kontaktierung der Wicklungsdrähte entstehen, sodass es wünschenswert ist, die Wicklungsdrähte möglichst beabstandet zueinander gleichmäßig aus den Zwischenräumen der Spulen herauszuführen, beispielsweise ein Wicklungsdraht pro Zwischenraum. Das führt zudem zu einer möglichst gleichmäßigen Anordnung der elektrischen Kontakte am Umfang des Stators. Der Stator weist in der Regel einen Wicklungsträger aus einem Kunststoff-Spritzgussbauteil auf, der das Blechlamellenpaket durch den ausgeführten Spritzguss umschließt.

Besonders vorteilhaft ist es beispielsweise, wenn sich die Wickelrichtung entweder gleichförmig oder in einem Rhythmus über den gesamten Umfang des Stators periodisch wiederholt. Wickelsysteme der hier interessierenden Art bilden sogenannte Sternpunkte, und es können Spulenpaare gebildet werden, bei denen eine Phase angeschlossen wird und ein weiteres Wicklungsende an einem Sternpunkt angebunden wird. Zwölf Spulen, die zwei getrennt voneinander vorhandene Wicklungseinheiten bilden, sind drei Phasen pro Wicklungseinheit vorgesehen, sodass bei zwei Sternpunkten mit jeweils drei Anschlüssen insgesamt sechs Phasenanschlüsse und sechs Sternpunktanschlüsse entstehen, also 12 Wicklungsdrahtkontaktierungen insgesamt.

Die Aufgabe der Erfindung liegt in der Weiterbildung einer Motoreinheit mit einem verbesserten Wicklungssystem, insbesondere mit einem Wicklungssystem, das auf einfache Weise extern beschaltet werden kann, und der Wicklungsdraht der Spulen auf dem Stator sollte mit den einzelnen Anschlüssen möglichst nicht bauraumkritisch aus den Wicklungen herausgeführt werden. Zudem sollte ein Wickelschema bereitgestellt werden, das mit einem Wickelautomaten auf vorteilhafte Weise hergestellt werden kann.

Diese Aufgabe wird ausgehend von einer Motoreinheit gemäß dem Oberbegriff des Anspruches 1 in Verbindung mit den kennzeichnenden Merkmalen gelöst. Vorteilhafte Weiterbildungen der Erfindung sind in den abhängigen Ansprüchen und in der Beschreibung angegeben.

Die Erfindung schließt die technische Lehre ein, dass die Spulenpaare mit Bezug auf ihre beiden Spulen von Spulenpaar zu Spulenpaar immer eine identische Wickelpaarrichtung aufweisen, wobei die Stränge jeweils Anschlüsse einerseits an eine Phase und andererseits an einen Sternpunkt aufweisen, wobei der ersten Wicklungseinheit ein erster Sternpunkt und der zweiten Wicklungseinheit ein zweiter Sternpunkt zugeordnet ist und wobei für jedes zweite aufeinander folgende Spulenpaar vorgesehen ist, dass der Strang vom Anschluss der Phase beginnend zwischen den beiden Spulen des Spulenpaares diesen zugeführt ist und der Anschluss an den Sternpunkt seitlich einer ersten Spule des Spulenpaares aus diesen herausgeführt ist oder für jedes zweite aufeinander folgende Spulenpaar vorgesehen ist, dass der Strang vom Anschluss der Phase beginnend seitlich einer ersten Spule des Spulenpaares diesen zugeführt ist und der Anschluss an den Sternpunkt zwischen den beiden Spulen des Spulenpaares aus diesen herausgeführt ist.

Der Kerngedanke der Erfindung betrifft damit ein Wicklungssystem, bei dem jeder der aufeinander folgenden Spulen ungeachtet der Zugehörigkeit zu einer Wicklungseinheit auf dem vollen Umfang des Stators eine abwechselnde Wickelrichtung von Spule zu Spule aufweist. Durch ein solches Wicklungssystem ist ein Stator mit einem Wickelautomaten auf verbesserte, insbesondere einfache Weise bewickelbar, da der Wickelautomat periodisch wiederkehrende sich exakt und über dem gesamten Umfang abwechselnde Wickelrichtungen abfahren kann, und jeder Spule kann ein elektrischer Kontakt zugeordnet werden, wodurch sich auf dem Umfang eine gleichmäßige Verteilung der Kontakte der Wicklungsdrähte mit zueinander gleichem Abstand ergibt. Darüber hinaus sind keine Drahtüberschneidungen am Stator mehr vorhanden, da außen am Bund des Stators nur ein einziger Draht herumgeführt werden muss, um diesen zur nächsten Spule zu führen.

Dabei bilden jeweils zwei benachbarte Spulen ein Spulenpaar, die einen gemeinsamen Strang aufweisen. Die Spulenpaare können mit Bezug auf ihre beiden Spulen von Spulenpaar zu Spulenpaar immer eine identische Wickelpaarrichtung aufweisen. Insofern ergibt sich ein Gesamt-Wicklungssystem auf dem Stator, gemäß dem die Wickelrichtung links, rechts, links, rechts, links, rechts usw. orientiert ist.

Die Stränge der Wicklungseinheiten weisen jeweils Anschlüsse einerseits an eine Phase und andererseits an einem Sternpunkt auf, wobei der ersten Wicklungseinheit ein erster Sternpunkt und der zweiten Wicklungseinheit ein zweiter Sternpunkt zugeordnet sind. Die Wicklungsdrähte der einzelnen Spulen werden im Sternpunkt miteinander verbunden, und mit drei Strängen pro Wicklungseinheit werden drei Wicklungsdrähte auf einen jeweiligen Sternpunkt geführt, und jede Wicklungseinheit weist drei Phasen auf.

Erfindungsgemäß ist für jedes zweite aufeinanderfolgende Spulenpaar vorgesehen, dass der Strang vom Anschluss der Phase beginnend seitlich einer ersten Spule des Spulenpaares dieser zugeführt ist und der Anschluss an den Sternpunkt zwischen den beiden Spulen des Spulenpaares aus diesem herausgeführt ist.

Erfindungsgemäß ist für jedes zweite aufeinanderfolgende Spulenpaar vorgesehen, dass der Strang vom Anschluss der Phase beginnend zwischen den beiden Spulen des Spulenpaares diesem zugeführt ist, und der Anschluss an den Sternpunkt seitlich einer ersten Spule des Spulenpaares aus diesem herausgeführt ist.

Insofern sind die Anschlüsse an die Phase und die Sternpunkte jedes zweiten Spulenpaares in sich wiederholender Weise gleich ausgeführt und es sind keine Drahtüberschneidungen am Stator vorhanden, da außen am Bund des Stators nur ein einziger Draht herumgeführt werden muss, um diesen zur nächsten Spule zu führen.

Der Stator weist vorzugsweise ein Blechlamellenpaket auf, um das herum wenigstens abschnittsweise ein Wicklungsträger ausgebildet ist, wobei der Wicklungsdraht der Stränge auf dem Wicklungsträger im Bereich der vorspringenden Zähne angeordnet ist. Der Wicklungsträger dient dabei nicht nur zur Aufnahme der Spulen, die gebildet sind mit den Wicklungen aus dem Wicklungsdraht, sondern der Wicklungsträger dient zudem auch zur haltenden Anordnung der Stränge der Wicklungseinheiten.

Für diese Haltefunktion kann der Wicklungsträger Anformungen aufweisen, an denen die Anschlüsse der Stränge angeordnet sind. Die Anformungen bilden beispielsweise domartige Vorsprünge, die sich über den Stator, insbesondere über das Blechlamellenpaket, in Höhenrichtung des Stators fortsetzend erstrecken. Der Stator weist nach innen gerichtete Zähne auf, auf denen die Spulen mit dem Wicklungsdraht aufgebracht sind, und der Wicklungsdraht wird sowohl für den Beginn des Wicklungsdrahtes einer Spule als auch für das Ende des Wicklungsdrahtes einer Spule radial nach außen hin zu den Anformungen geführt, wobei dann, wenn der Wicklungsdraht von Spule zu Spule durchgehend verläuft, der Wicklungsdraht außenseitig an den Anformungen herumgeführt wird.

Mit besonderem Vorteil bildet der Wicklungsdraht zwischen den beiden Spulen des Spulenpaares am Wicklungsträger Zwischenabschnitte, die am Wicklungsträger angeordnet und insbesondere um die Anformung außenseitig herumgeführt sind. Die Zwischenabschnitte bilden somit Abschnitte des Wicklungsdrahtes von Spule zu Spule.

Nach einer noch weiteren Ausgestaltung der erfindungsgemäßen Motoreinheit ist eine Leiterkarte vorgesehen, wobei die Leiterkarte außenseitig am Gehäuse angeordnet ist und mit den Anschlüssen der Stränge elektrisch kontaktiert ist. Insbesondere erfolgt die elektrische Kontaktierung kabellos, beispielsweise mittels Steckkontakte oder mittels sonstiger Kontaktelemente. Insbesondere können an den Anformungen elektrische Kontaktelemente angeordnet sein, mittels denen die Anschlüsse der Stränge elektrisch kontaktiert sind und/oder an denen die Leiterkarte haltend angeordnet ist. Insbesondere ist die Leiterkarte mit den elektrischen Kontaktelementen an den Anformungen ebenfalls elektrisch kontaktiert, sodass die Kontaktelemente die Leiterkarte sowohl mit dem Wicklungsdraht der Spulen elektrisch kontaktieren als auch die Leiterkarte haltend an der Motoreinheit anordnen.

Die Leiterkarte kann Leiterbahnen mit entsprechenden Kontaktelementen aufweisen, über die die Phasen und die Sternpunkte entsprechend beschaltet werden können. Beispielsweise können drei Wicklungsdrähte pro Wicklungseinheit jeweils einen Sternpunkt auf der Leiterkarte bilden, indem drei Wicklungsdrähte über drei zugeordnete elektrische Kontaktelemente mit einer gemeinsamen Leiterbahnen auf der Leiterkarte elektrisch verbunden sind. Die Phasen können separat mit Leiterbahnen auf der Leiterkarte verbunden werden, dies ebenfalls über separate elektrische Kontaktelemente. Die Phasen sind bei zwei Wicklungseinheiten insofern 6-fach vorhanden und können über entsprechende Einzel-Leiter fern der Leiterkarte der Steuerung zugeführt werden.

Die Erfindung betrifft ferner einen Türantrieb mit einer Motoreinheit gemäß obenstehender Darstellung. Weiterhin betrifft die Erfindung eine Türanlage mit einem solchen Türantrieb.

Die Türanlage kann ein Verbindungselement zum Verbinden mit einem Flügelelement aufweisen. Zusätzlich oder alternativ kann die Türanlage wenigstens ein Flügelelement, mit dem der Türantrieb antreibend in Wirkverbindung steht, aufweisen.

Beispielsweise kann die Türanlage als eine Schiebetüranlage ausgebildet sein. Die Schiebetüranlage kann einen Riemen, insbesondere einen Zahnriemen, umfassen. Das Verbindungselement kann zumindest mittelbar mit dem Riemen verbunden sein. Das Verbindungselement kann als Läufer, insbesondere als Rollwagen, ausgebildet sein. Das Verbindungselement kann in einer Schiene, insbesondere in einer Schiene eines Trägerprofils, laufen. Der Riemen kann zwischen Riemenscheiben der Türanlage gespannt sein. Eine der Riemenscheiben kann als die Riemenscheibe des erfindungsgemäßen Türantriebs ausgebildet sein. Der Türantrieb kann in dem Trägerprofil angeordnet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht des Türantriebs mit einer Motoreinheit, die als Direktantrieb ausgeführt ist,
- Fig. 2: eine Ansicht der Motoreinheit mit einem geöffneten Gehäuse,
- Fig. 3: eine Draufsicht auf den Stator mit zwölf Spulen,
- Fig. 4: eine schematische Ansicht einer ersten Wicklungseinheit des Wicklungssystems,
- Fig. 5: eine schematische Ansicht einer zweiten Wicklungseinheit des Wicklungssystems und
- Fig. 6: eine perspektivische Ansicht des Stators der Motoreinheit mit der Führung des Wicklungsdrahtes.

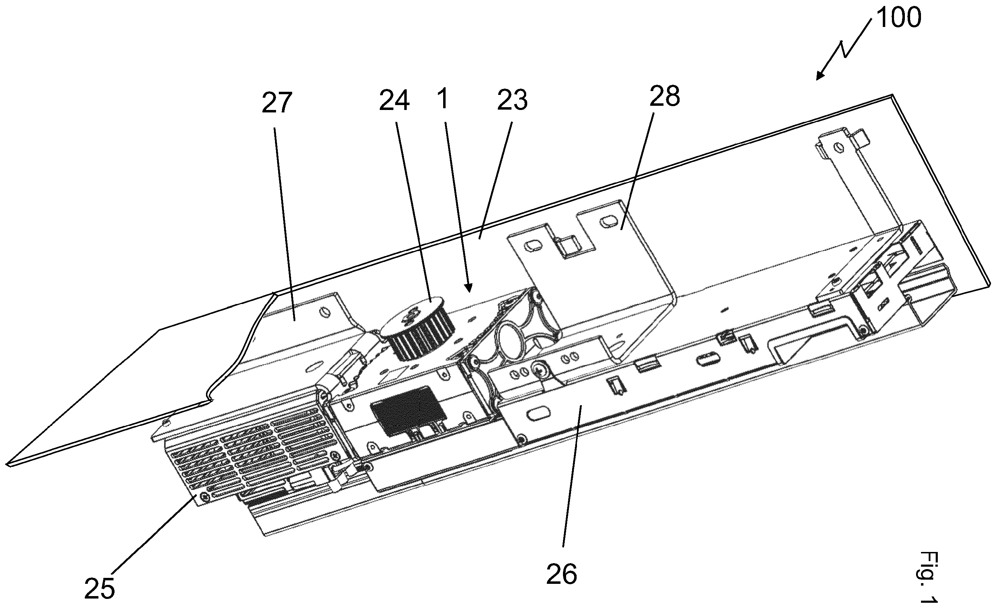

Fig. 1 zeigt in einer perspektivischen Ansicht den Türantrieb 100, wie dieser in einem Gebäude installiert werden kann, womit auch die Installation auf Schiffen und Flugzeugen umfasst sein soll, und ein Türantrieb 100 dieser Art dient beispielsweise als Antrieb in automatischen Schiebetüranlagen.

Die Grundstruktur des Türantriebs 100 bildet ein Trägerprofil 23, welches zu einfacheren Ansicht verkürzt dargestellt ist, zudem ist der wesentliche obere Teil des L-förmigen Trägerprofils 23 aufgeschnitten gezeigt, um die weiteren wichtigen Komponenten des Türantriebs 100 sichtbar zu machen.

Als zentraler Bestandteil weist der Türantrieb 100 eine Motoreinheit 1 auf, und die Motoreinheit 1 besitzt die Grundform eines Quaders, der das Gehäuse 10 der Motoreinheit bildet. Um einen Abtrieb und damit eine Verbindung zu einem nicht näher dargestellten Flügelelement einer Türanlage zu ermöglichen, ist an der Motoreinheit 1 eine Riemenscheibe 24 angeordnet, über die ein Zahnriemen gelegt werden kann, mit dem schließlich die Verbindung zu dem oder den Flügelelementen, beispielsweise den Glasschiebeelementen, hergestellt wird.

Benachbart zur Motoreinheit 1 weist der Türantrieb 100 ein Netzteil 25 und eine Steuerung 26 auf, und das Netzteil 25 und die Steuerung 26 sind an sich gegenüberliegenden Seiten der Motoreinheit 1 angeordnet. Die Motoreinheit 1 ist mit einem ersten Flanschelement 27 am Trägerprofil 23 befestigt, wobei das erste Flanschelement 27 zugleich das Netzteil 25 mit aufnimmt. Weiterhin ist die Motoreinheit 1 mit einem zweiten Flanschelement 28 mit dem Trägerprofil 23 verbunden, wobei das zweiten Flanschelement 28 zugleich die Steuerung 26 mit aufnimmt. Alternativ ist auch die Ausführung eines einzigen Flansches möglich, um wenigstens die Motoreinheit 1, das Netzteil 25 und die Steuerung 26 aufzunehmen, ferner besteht die Möglichkeit, dass die Motoreinheit 1, das Netzteil 25 und/oder die Steuerung 26 jeweils zugeordnete separate Flanschelemente zur Anordnung in oder am Trägerprofil 23 aufweisen.

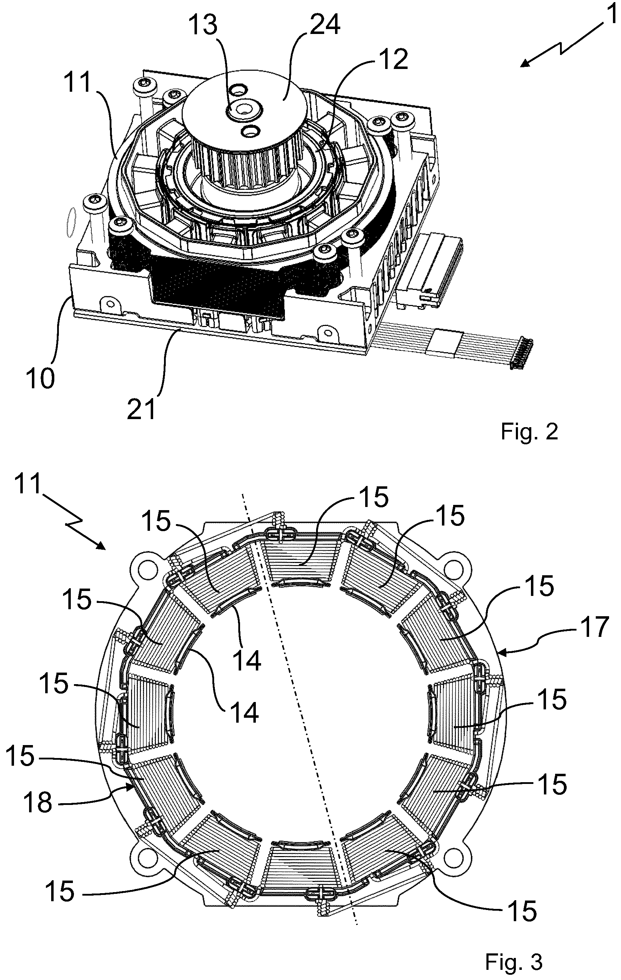

Fig. 2 zeigt eine perspektivische Ansicht der vereinzelten Motoreinheit 1 mit einem Gehäuse 10, das lediglich mit einer unteren Gehäusehälfte dargestellt ist, während eine obere Gehäusehälfte entfernt wurde, um die Motoreinheit 1 mit den wesentlichen Bestandteilen zu zeigen.

Innerhalb der beiden Gehäusehälften des Gehäuses 10 sind der Stator 11 und der Rotor 12 mit der Abtriebswelle 13 aufgenommen. Außerhalb des nicht dargestellten Teils des Gehäuses 10 ist auf dem hervorstehenden Teil der Abtriebswelle 13 eine Riemenscheibe 24 aufgebracht. Unterseitig, auf der der Anordnung der Riemenscheibe 24 gegenüberliegenden Seite des Gehäuses 10, ist eine Leiterkarte 21 angeordnet. Das Gehäuse 10 weist die Form eines Quaders auf, und die Leiterkarte 21 ist in einer Rechteckform ausgestaltet und greift dabei die rechteckige Grundform des Gehäuses 10 der Motoreinheit 1 auf und ist an diese angepasst.

Fig. 3 zeigt den Stator 11 mit dem Blechlamellenpaket 17 und mit dem Wicklungsträger 18, und auf letzterem sind die insgesamt zwölf Spulen 15 auf radial nach innen weisenden Zähnen 14 aufgebracht, die aus dem Blechlamellenpaket bestehen, wobei wenigstens im Bereich der Zähne 14 das Blechlamellenpaket mit dem Wicklungsträger 18 aus Kunststoff durch einen Spritzguss umschlossen ist. Auf einer ersten Seite der sechs Spulen ist eine erste Wicklungseinheit gebildet und gegenüberliegend bilden weitere sechs Spulen eine zweite Wicklungseinheit, wobei die Wicklungseinheiten elektrisch nicht miteinander verbunden sind und separat mit jeweils zugeordneten Motorendstufen betrieben werden können. Die beiden Wicklungseinheiten sind durch eine strichpunktierte Linie in ihrer Teilungsebene angedeutet.

Jeder der Spulen 15 sitzt damit auf einem zugeordneten Zahn 14 des Stators 11, und die Spulen 15 sind radial nach innen gerichtet.

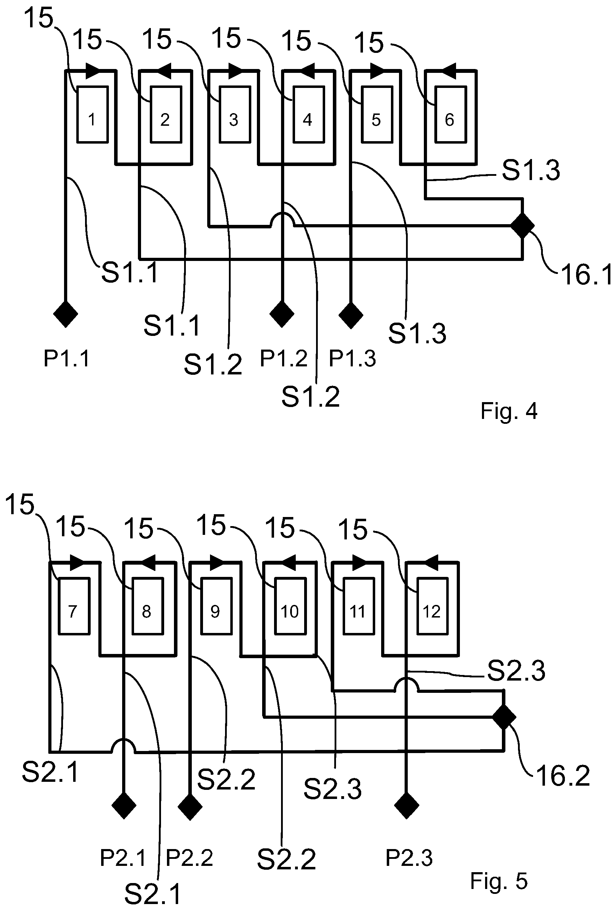

Die Figuren 4 und 5 zeigen jeweils schematische Ansichten einer Wicklungseinheit mit insgesamt drei Strängen S1.1, S1.2 und S1.3 für die erste Wicklungseinheit und die Stränge S2.1, S2.2 uns S2.3 für die zweite Wicklungseinheit. Jeweils zueinander benachbarte Spulen 15 bilden Spulenpaare, sodass die Spulenpaare wie folgt paarweise aufgeführt sind: erstes Spulenpaar: Spule 1 und Spule 2, zweites Spulenpaar: Spule 3 und Spule 4, drittes Spulenpaar: Spule 5 und Spule 6, viertes Spulenpaar: Spule 7 und Spule 8, fünftes Spulenpaar: Spule 9 und Spule 10 und sechstes Spulenpaar: Spule 11 und Spule 12.

Die Spulenpaare 1,2; 3,4 und 5,6 bilden die erste Wicklungseinheit, die elektrisch getrennt ist von der zweiten Wicklungseinheit, die gebildet ist durch die Spulenpaare 7,8; 9,10 und 11,12.

Die Spulenpaare weisen mit Bezug auf die beiden Spulen 15 von Spulenpaar zu Spulenpaar eine zueinander identische Wickelpaarrichtung auf. Hingegen sind die benachbarten Spulen jeweils gegensinnig gewickelt. Die Wicklungsrichtung ist dabei mit Pfeilen in den Strängen angedeutet. Daraus wird deutlich, dass jedem Spulenpaar Spulen 15 zugeordnet sind, die zueinander gegensinnig gewickelt sind.

Die Stränge S1.1, S1.2, S1.3, S2.1, S2.2 und S2.3 weisen jeweils Anschlüsse einer ersten Phase P1.1, P1.2, P1.3, P2.1, P2.2, P2.3 auf, und auf einer gegenüberliegenden Seite sind die Stränge den Sternpunkten 16.1 und 16.2 zugewiesen.

Das Ausführungsbeispiel zeigt, dass für jedes zweite aufeinanderfolgende Spulenpaar der Strang S1.1, S1.3, S2.2 vom Anschluss der Phase P1.1, P1.3, P2.2 beginnend seitlich einer ersten Spule 15 des Spulenpaares zugeführt ist und der Anschluss an den Sternpunkt 16.1, 16.2 zwischen den beiden Spulen 15 des Spulenpaares herausgeführt ist. Ebenso in abwechselnder Weise ist vorgesehen, dass der Strang S1.2, S2.1, S2.3 vom Anschluss der Phase P1.2, P2.1, P2.3 beginnend zwischen den beiden Spulen 15 des Spulenpaares zugeführt ist und der Anschluss an den Sternpunkten 16. 1, 16.2 seitlich einer ersten Spule 15 der Spulenpaare herausgeführt ist.

Dadurch wird deutlich, dass zwischen jeder Spule 15 entweder ein Phasenanschluss oder ein Sternpunktanschluss herausragt, sodass die Anschlüsse zur späteren Beschaltung der Spulen gleichmäßig beabstandet und gleichmäßig verteilt über dem Umfang des Stators ausgeführt werden können.

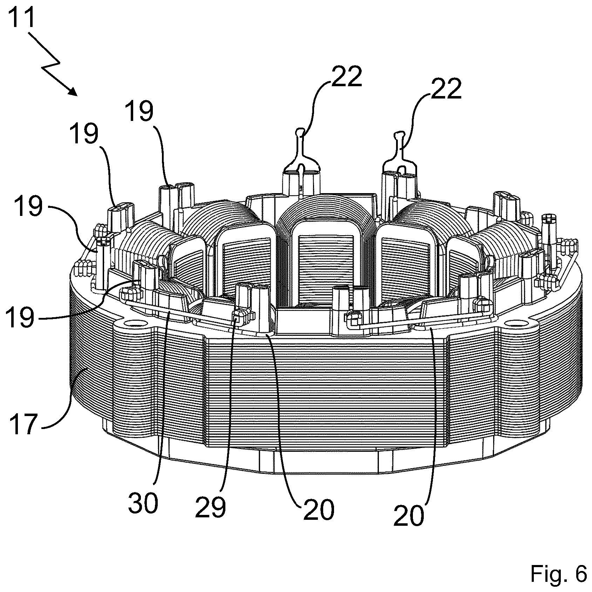

Der Stator 11 weist gemäß Fig. 6 ein Blechlamellenpaket 17 auf, um das herum wenigstens abschnittsweise, im Ausführungsbeispiel innenseitig und dazu ober- und unterseitig, ein Wicklungsträger 18 ausgebildet ist. Dabei ist der Wicklungsdraht der Stränge auf und oder am Wicklungsträger angeordnet. Der Wicklungsträger 18 weist Anformungen 19 auf, an denen die Anschlüsse der Stränge angeordnet sind.

Der Wicklungsdraht weist zwischen benachbarten Spulen 15 eines jeden Spulenpaares am Wicklungsträger 18 Zwischenabschnitte 20 auf, die am Wicklungsträger 18 angeformt und insbesondere um die Anformung 19 herumgeführt sind. Die Anformungen 19 ragen seitlich vom Stator 11 ab und an diese können elektrisch Kontaktelemente eingebracht sein, von denen zwei Kontaktelemente 22 beispielhaft gezeigt sind. Ist der Wicklungsdraht mit den Kontaktelementen 22 kontaktiert, so kann dieser in einem finalen Arbeitsschritt außenseitig abgeschert werden. Hierzu sind an den Anformungen 19 radial nach außen gerichtete Vorsprünge 29 vorgesehen, um die herum der Wicklungsdraht gewickelt wird, und von Vorsprung 29 zu Vorsprung 29 erstreckt sich ein Hilfsbschnitt 30.

Werden die Vorsprünge 29 nach Fertigstellung der Wicklung und nach Einsetzen jeder der Kontaktelemente 22 in die Anformungen 19 abgeschert, so wird auch ein Hilfsabschnitt 30 zwischen zwei Vorsprüngen 29 entfernt, sodass mit den Anformungen 19 die Phasen und Sternpunktanschlüsse bereitgestellt werden zur späteren Kontaktierung mit der Leiterplatte 21, auf der die Phasen und die Sternpunktanschlüsse beschaltet werden.

Die Erfindung beschränkt sich in ihrer Ausführung nicht auf das vorstehend angegebenen bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 100: Türantrieb

- 1: Motoreinheit

- 10: Gehäuse
- 11: Stator
- 12: Rotor
- 13: Abtriebswelle
- 14: Zahn
- 15: Spule
- 16.1: Sternpunkt
- 16.2: Sternpunkt
- 17: Blechlamellenpaket
- 18: Wicklungsträger
- 19: Anformung
- 20: Zwischenabschnitt
- 21: Leiterkarte
- 22: Kontaktelement
- 23: Trägerprofil
- 24: Riemenscheibe
- 25: Netzteil
- 26: Steuerung
- 27: Flanschelement
- 28: Flanschelement
- 29: Vorsprung
- 30: Hilfsabschnitt
- S1.1: Strang
- S1.2: Strang
- S1.3: Strang
- S2.1: Strang
- S2.2: Strang
- S2.3: Strang

- P1.1: Phase
- P1.2: Phase
- P1.3: Phase
- P2.1: Phase
- P2.2: Phase
- P2.3: Phase

## Patentansprüche

1. Motoreinheit (1) für einen Türantrieb (100) zur Anordnung an oder in Verbindung mit einer Gebäudetür, mit dem zumindest ein Flügelelement der Gebäudetür bewegbar ist, aufweisend ein Gehäuse (10), in dem ein Stator (11) ruhend aufgenommen ist und wobei ein Rotor (12) drehbeweglich im Gehäuse (10) angeordnet ist, der eine Abtriebswelle (13) aufweist, wobei die Abtriebswelle (13) mit dem Flügelelement antreibend in Wirkverbindung bringbar ist, und wobei der Stator (11) ein Wicklungssystem mit einer ersten Wicklungseinheit aufweisend drei Stränge (S1.1, S1.2, S1.3) und einer zweiten Wicklungseinheit aufweisend drei Stränge (S2.1, S2.2, S2.3) umfasst, wobei die Wicklungseinheiten elektrisch voneinander getrennt sind, und wobei der Stator (11) eine Anzahl von zueinander benachbarten Zähnen (14) aufweist, auf denen die Stränge (S1.1, S1.2, S1.3, S2.1, S2.2, S2.3) zu Spulen (15) aufgewickelt sind, die jeweils auf einem zugeordneten Zahn (14) des Stators (11) sitzen, und wobei
die Wickelrichtung der zueinander benachbarten Spulen (15) wenigstens einer der Wicklungseinheiten von Spule (15) zu Spule (15) abwechselnd ausgebildet ist und wobei jeweils zwei benachbarte Spulen (15) ein Spulenpaar bilden, die einen gemeinsamen Strang (S1.1, S1.2, S1.3, S2.1, S2.2, S2.3) aufweisen,
wobei
- die Spulenpaare mit Bezug auf ihre beiden Spulen (15) von Spulenpaar zu Spulenpaar immer eine identische Wickelpaarrichtung aufweisen, wobei
die Stränge (S1.1, S1.2, S1.3, S2.1, S2.2, S2.3) jeweils Anschlüsse einerseits an eine Phase (P1.1, P1.2, P1.3, P2.1, P2.2, P2.3) und andererseits an einen Sternpunkt (16.1, 16.2) aufweisen, wobei der ersten Wicklungseinheit ein erster Sternpunkt (16.1) und der zweiten Wicklungseinheit ein zweiter Sternpunkt (16.2) zugeordnet ist und wobei
- für jedes zweite aufeinander folgende Spulenpaar vorgesehen ist, dass der Strang (S1.2, S2.1, S2.3) vom Anschluss der Phase (P1.2, P2.1, P2.3) beginnend zwischen den beiden Spulen (15) des Spulenpaares diesen zugeführt ist und der Anschluss an den Sternpunkt (16.1, 16.2) seitlich einer ersten Spule (15) des Spulenpaares aus diesen herausgeführt ist und
- für jedes zweite aufeinander folgende Spulenpaar vorgesehen ist, dass der Strang (S1.1, S1.3, S2.2) vom Anschluss der Phase (P1.1, P1.3, P2.2) beginnend seitlich einer ersten Spule (15) des Spulenpaares diesen zugeführt ist und der Anschluss an den Sternpunkt (16.1, 16.2) zwischen den beiden Spulen (15) des Spulenpaares aus diesen herausgeführt ist.

2. Motoreinheit (1) nach Anspruch 1, **dadurch gekennzeichnet, dass** der Stator (11) ein Blechlamellenpaket (17) aufweist, um das herum wenigstens abschnittsweise ein Wicklungsträger (18) ausgebildet ist, wobei der Wicklungsdraht der Stränge (S1.1, S1.2, S1.3, S2.1, S2.2, S2.3) auf und/oder am Wicklungsträger (18) angeordnet ist.

3. Motoreinheit (1) nach Anspruch 2, **dadurch gekennzeichnet, dass** der Wicklungsträger (18) Anformungen (19) aufweist, an denen die Anschlüsse der Stränge (S1.1, S1.2, S1.3, S2.1, S2.2, S2.3) angeordnet sind.

4. Motoreinheit (1) nach einem der vorgenannten Ansprüche, **dadurch gekennzeichnet, dass** der Wicklungsdraht zwischen den beiden Spulen (15) des Spulenpaares am Wicklungsträger (18) Zwischenabschnitte (20) bildet, die am Wicklungsträger (18) angeordnet und/oder um die Anformungen (19) herumgeführt sind.

5. Motoreinheit (1) nach einem der vorgenannten Ansprüche, **dadurch gekennzeichnet, dass** eine Leiterkarte (21) vorgesehen ist, wobei die Leiterkarte (21) außenseitig am Gehäuse (10) angeordnet und mit den Anschlüssen der Stränge (S1.1, S1.2, S1.3, S2.1, S2.2, S2.3) elektrisch kontaktiert ist.

6. Motoreinheit (1) nach Anspruch 5, **dadurch gekennzeichnet, dass** an den Anformungen (19) elektrische Kontaktelemente (22) angeordnet sind, mit denen die Anschlüsse der Stränge (S1.1, S1.2, S1.3, S2.1, S2.2, S2.3) elektrisch kontaktiert sind und/oder an denen die Leiterkarte (21) haltend angeordnet ist.

7. Motoreinheit (1) nach Anspruch 5 oder 6, **dadurch gekennzeichnet, dass** die Phasen (P1.1, P1.2, P1.3, P2.1, P2.2, P2.3) und/oder die Sternpunkte (16.1, 16.2) auf der Leiterkarte (21) beschaltet und extern elektrisch angebunden sind.

8. Türantrieb (100) mit einer Motoreinheit (1) nach einem der vorgenannten Ansprüche.

9. Türanlage mit einem Türantrieb (100) nach Anspruch 8, aufweisend wenigstens ein Verbindungselement zum Verbinden mit einem Flügelelement und/oder wenigstens ein Flügelelement, mit dem der Türantrieb (100) antreibend in Wirkverbindung steht.

## Claims

1. A motor unit (1) for a door drive (100) for arrangement on or in connection with a building door, with which at least one leaf element of the building door can be moved, having a housing (10) in which a stator (11) is received in a stationary manner, and wherein a rotor (12) is arranged in the housing (10) so as to be rotatably movable, which rotor has an output shaft (13), wherein the output shaft (13) can be brought into operative connection with the leaf element in a driving manner, and wherein the stator (11) comprises a winding system with a first winding unit having three strands (S1.1, S1.2, S1.3) and a second winding unit having three strands (S2.1, S2.2, S2.3), wherein the winding units are electrically separated from one another, and wherein the stator (11) has a number of teeth (14) adjacent to one another, on which the strands (S1.1, S1.2, S1.3, S2.1, S2.2, S2.3) are wound to form coils (15), each of which sits on an assigned tooth (14) of the stator (11), and wherein
the winding direction of the coils (15), adjacent to one another, of at least one of the winding units is designed alternately from coil (15) to coil (15), and wherein in each case two adjacent coils (15) form a coil pair which has a common strand (S1.1, S1.2, S1.3, S2.1, S2.2, S2.3),
wherein
- the coil pairs always have an identical winding pair direction in relation to their two coils (15) from coil pair to coil pair, wherein
the strands (S1.1, S1.2, S1.3, S2.1, S2.2, S2.3) each have connections, on the one hand, to a phase (P1.1, P1.2, P1.3, P2.1, P2.2, P2.3) and, on the other hand, to a star point (16.1, 16.2), wherein a first star point (16.1) is assigned to the first winding unit and a second star point (16.2) is assigned to the second winding unit, and wherein
- for every second successive coil pair, it is provided that the strand (S1.2, S2.1, S2.3) is routed, starting from the connection of the phase (P1.2, P2.1, P2.3), between the two coils (15) of the coil pair and fed to them, and the connection to the star point (16.1, 16.2) is routed out of the coil pair laterally to a first coil (15) of the coil pair
and
- for every second successive coil pair, it is provided that the strand (S1.1, S1.3, S2.2) is routed, starting from the connection of the phase (P1.1, P1.3, P2.2), laterally to a first coil (15) of the coil pair and fed to them, and the connection to the star point (16.1, 16.2) is routed out of the coil pair between the two coils (15) of the coil pair.

2. The motor unit (1) according to claim 1, **characterised in that** the stator (11) has a laminated core (17), around which a winding support (18) is formed at least in sections, wherein the winding wire of the strands (S1.1, S1.2, S1.3, S2.1, S2.2, S2.3) is arranged on and/or at the winding support (18).

3. The motor unit (1) according to claim 2, **characterised in that** the winding support (18) has moulded portions (19) on which the connections of the strands (S1.1, S1.2, S1.3, S2.1, S2.2, S2.3) are arranged.

4. The motor unit (1) according to one of the preceding claims, **characterised in that** the winding wire forms intermediate sections (20) between the two coils (15) of the coil pair on the winding support (18), which intermediate sections are arranged on the winding support (18) and/or are routed around the moulded portions (19).

5. The motor unit (1) according to one of the preceding claims, **characterised in that** a circuit board (21) is provided, wherein the circuit board (21) is arranged on the outside of the housing (10) and is in electrical contact with the connections of the strands (S1.1, S1.2, S1.3, S2.1, S2.2, S2.3).

6. The motor unit (1) according to claim 5, **characterised in that** on the moulded portions (19) are arranged electrical contact elements (22), with which the connections of the strands (S1.1, S1.2, S1.3, S2.1, S2.2, S2.3) are in electrical contact and/or on which the circuit board (21) is arranged in a retaining manner.

7. The motor unit (1) according to claim 5 or 6, **characterised in that** the phases (P1.1, P1.2, P1.3, P2.1, P2.2, P2.3) and/or the star points (16.1, 16.2) are connected on the circuit board (21) and are electrically connected externally.

8. A door drive (100) with a motor unit (1) according to one of the preceding claims.

9. A door system with a door drive (100) according to claim 8, having at least one connecting element for connection to a leaf element and/or at least one leaf element with which the door drive (100) is in operative connection in a driving manner.

## Revendications

1. Unité moteur (1) pour un entraînement de porte (100) destiné à l'agencement sur ou en combinaison avec une porte de bâtiment, avec laquelle au moins un élément de vantail de la porte de bâtiment peut être déplacé, présentant un boîtier (10) dans lequel un stator (11) est logé de manière fixe et dans laquelle un rotor (12) est agencé de manière à pouvoir tourner dans le boîtier (10), lequel rotor présente un arbre de sortie (13), dans laquelle l'arbre de sortie (13) peut être mis en combinaison active d'entraînement avec l'élément de vantail, et dans laquelle le stator (11) comprend un système d'enroulement comportant une première unité d'enroulement présentant trois brins (S1.1, S1.2, S1.3) et une seconde unité d'enroulement présentant trois brins (S2.1, S2.2, S2.3), dans laquelle les unités d'enroulement sont électriquement séparées l'une de l'autre, et dans laquelle le stator (11) présente un certain nombre de dents (14) adjacentes les unes aux autres, sur lesquelles les brins (S1.1, S1.2, S1.3, S2.1, S2.2, S2.3) sont enroulés pour former des bobines (15) qui reposent respectivement sur une dent (14) associée du stator (11), et dans laquelle
le sens d'enroulement des bobines (15) adjacentes l'une à l'autre d'au moins l'une des unités d'enroulement est conçu de manière alternée de bobine (15) en bobine (15), et dans laquelle deux bobines (15) adjacentes forment respectivement une paire de bobines qui présentent un brin (S1.1, S1.2, S1.3, S2.1, S2.2, S2.3) commun,
dans laquelle
- les paires de bobines présentent toujours, par rapport à leurs deux bobines (15), de paire de bobines en paire de bobines, un sens d'enroulement de paire identique, dans laquelle
les brins (S1.1, S1.2, S1.3, S2.1, S2.2, S2.3) présentent respectivement des raccordements d'une part à une phase (P1.1, P1.2, P1.3, P2.1, P2.2, P2.3) et d'autre part à un point neutre (16.1, 16.2), dans laquelle un premier point neutre (16.1) est associé à la première unité d'enroulement et un second point neutre (16.2) est associé à la seconde unité d'enroulement, et dans laquelle
- pour chaque seconde paire de bobines consécutives, il est prévu que le brin (S1.2, S2.1, S2.3), en partant du raccordement de la phase (P1.2, P2.1, P2.3), soit acheminé à celle-ci entre les deux bobines (15) de la paire de bobines et que le raccordement au point neutre (16.1, 16.2) soit sorti de celle-ci sur le côté d'une première bobine (15) de la paire de bobines
et
- pour chaque seconde paire de bobines consécutives, il est prévu que le brin (S1.1, S1.3, S2.2), en partant du raccordement de la phase (P1.1, P1.3, P2.2), soit amené à celle-ci sur le côté d'une première bobine (15) de la paire de bobines et que le raccordement au point neutre (16.1, 16.2) soit sorti de celle-ci entre les deux bobines (15) de la paire de bobines.

2. Unité moteur (1) selon la revendication 1, **caractérisée en ce que** le stator (11) présente un paquet de lamelles de tôle (17) autour duquel est formé, au moins par sections, un support d'enroulement (18), dans laquelle le fil d'enroulement des brins (S1.1, S1.2, S1.3, S2.1, S2.2, S2.3) est agencé sur et/ou contre le support d'enroulement (18).

3. Unité moteur (1) selon la revendication 2, **caractérisée en ce que** le support d'enroulement (18) présente des parties moulées (19) sur lesquelles sont agencés les raccordements des brins (S1.1, S1.2, S1.3, S2.1, S2.2, S2.3).

4. Unité moteur (1) selon l'une des revendications précédentes, **caractérisée en ce que** le fil d'enroulement forme, entre les deux bobines (15) de la paire de bobines, des sections intermédiaires (20) sur le support d'enroulement (18), lesquelles sont agencées sur le support d'enroulement (18) et/ou guidées autour des parties moulées (19).

5. Unité moteur (1) selon l'une des revendications précédentes, **caractérisée en ce qu'**une carte de circuit imprimé (21) est prévue, dans laquelle la carte de circuit imprimé (21) est agencée à l'extérieur du boîtier (10) et est en contact électrique avec les raccordements des brins (S1.1, S1.2, S1.3, S2.1, S2.2, S2.3).

6. Unité moteur (1) selon la revendication 5, **caractérisée en ce que** des éléments de contact électriques (22) sont agencés sur les parties moulées (19), avec lesquels les raccordements des brins (S1.1, S1.2, S1.3, S2.1, S2.2, S2.3) sont en contact électrique et/ou sur lesquels la carte de circuit imprimé (21) est agencée de manière à être maintenue.

7. Unité moteur (1) selon la revendication 5 ou 6, **caractérisée en ce que** les phases (P1.1, P1.2, P1.3, P2.1, P2.2, P2.3) et/ou les points neutres (16.1, 16.2) sont connectés sur la carte de circuit imprimé (21) et sont reliés électriquement à l'extérieur.

8. Entraînement de porte (100) comportant une unité moteur (1) selon l'une des revendications précédentes.

9. Installation de porte comportant un entraînement de porte (100) selon la revendication 8, présentant au moins un élément de combinaison pour la combinaison avec un élément de vantail et/ou au moins un élément de vantail avec lequel l'entraînement de porte (100) est en combinaison active d'entraînement.
